# EUROPÄISCHE PATENTSCHRIFT

(11) **EP 0 564 710 B1**
(45) Veröffentlichungstag und Bekanntmachung des Hinweises auf die Patenterteilung: **24.05.1995**
(21) Anmeldenummer: 92120689.2
(22) Anmeldetag: 04.12.1992
(51) Int. Cl.: F16H 7/06, F16H 55/30

(54) **Kettenrad für Gelenkketten**
Sprocket for pintle chain
Roue à chaîne pour chaîne à maillons articulés

(30) Priorität: 07.04.1992 DE 4211595
(43) Veröffentlichungstag der Anmeldung: 13.10.1993
(73) Patentinhaber: FIRMA ERICH WULF UND SOHN GmbH & Co. KG, D-59889 Eslohe (DE)
(72) Erfinder: Stiesberg, Reinhard, W-5950 Finnentrop (DE)
(74) Vertreter: Fritz, Herbert, Dipl.-Ing.

(56) Entgegenhaltungen:
- DE-U- 1 838 979
- FR-A- 1 186 486

## Beschreibung

Die Erfindung bezieht sich auf ein Kettenrad für Gelenkketten, das mit geräuschdämpfenden Elementen ausgerüstet ist.

Bei einem bekannten geräuscharmen Kettentrieb (DE-A-10 40 335) sind in den Zahnlücken eines Kettenrades Polster aus verschleißfestem elastischem Werkstoff eingelassen, so daß sich dort die Kettenrollen geräuscharm abstützen können. Dies erfordert eine Sonderausführung des Kettenrades.

Stand der Technik ist weiter (DE-U-18 38 979) ein Gleisketten-Antrieb mit Gummidämpfung, dabei sind mit Kunststoff umgebene Rohr- oder Metallteile an der Innenseite von nach Art eines Kettenrades ausgebildeten Triebkränzen angeschraubt, so daß sie plattenförmige Kettenglieder, die über eine zwischen den Triebkränzen angeordnete Trommel laufen, geräuscharm abstützen. Diese Art der Geräuschdämpfung ist auf solche Gleiskettenantriebe spezifiziert.

Der Erfindung liegt die Aufgabe zugrunde, Kettenräder in Standardausführung mit optimal wirksamen geräuschdämpfenden Elementen auszurüsten.

Diese Aufgabe wird durch die Merkmale nach dem Patentanspruch 1 gelöst. Die Unteransprüche haben Varianten hinsichtlich der Anordnung der Dämpfungselemente zum Inhalt.

Bei dieser Lösung sind ringartige Dämpfungselemente aus einem zweckentsprechenden, jedoch verschleißfesten Kunststoff vorgesehen, wie er zum Beispiel unter dem Handelsnamen Vulkollan bekannt ist. Diese Dämpfungselemente sind beidseitig der Kettenradscheibe so angeordnet, daß die beidseitigen Laschen der Gelenkkette beim Umlauf derselben an ihnen abgestützt werden. Die Geräusche, die bei der harten Anlage von Metall auf Metall durch das Auftreffen der Kettenradzähne auf den Kettenbüchsen entstehen, werden dadurch gemildert, daß dabei eine relativ weiche Anlage der Kettenradlaschen an den Dämpfungselementen einhergeht.

Durch die besondere erfindungsgemäße Befestigung der ringartigen Dämpfungselemente mittels eines Hohlstiftes und einer Spannschraube, ist es möglich, durch Anziehen der Mutter die elastischen Ringe hinsichtlich des Außendurchmessers zu vergrößern und damit eventuelle fertigungsbedingte Ungenauigkeiten der Kettenlaschen und der Dämpfungselemente sowie Formänderungen durch Gelenkverschleiß auszugleichen. Nach Abnutzung der ringartigen Dämpfungselemente können sie nach Lösen der Verschraubung in eine Stellung gedreht werden, in der ein noch nicht abgenutzter Bereich der Oberfläche als Auflage und Abstützung zur Verfügung steht. Dadurch wird ein komplettes Austauschen der Dämpfungselemente nur nach sehr langen Betriebszeiten erforderlich sein.

Bei Ketten mit kunststoffbandagierten Laufrollen oder bei fehlerhafter Kettenteilung tritt eine starke Bewegung der Kettenglieder beim Umlauf um das Kettenrad auf. Dabei entsteht vermehrter Verschleiß zwischen den unbearbeiteten Laschenunterkanten und den Dämpfungselementen. In solchen Fällen erreicht man durch das Lösen der Mutter eine freie Beweglichkeit der Elemente. Diese können sich dann durch Drehen auf den Spannhülsen den Hin- und Herbewegungen der Laschen anpassen.

Nach der Erfindung kann jedes herkömmliche Kettenrad für Gelenkketten nachträglich mit dem Dämpfungselementen nach der Erfindung ausgerüstet werden. Gemäß der weiteren Erfindung werden unterschiedliche Anordnungen der Dämpfungselemente vorgeschlagen. So können die Dämpfungselemente auf einem Teilkreis jeweils im Bereich der Zahnlücken des Kettenrades angeordnet sein, beispielsweise bei Standard-Gelenkketten, bei denen die Höhe der Laschen etwa dem Rollendurchmesser entspricht. Daneben bietet sich die Anordnung der Dämpfungselemente im Bereich der Zähne des Kettenrades an, insbesondere in den Fällen, wo die Höhe der Laschen den Durchmesser der Rollen übersteigt, wenn sogenannte Formlaschen mit gewölbten Begrenzungen verwandt werden oder bei besonders kleinen Kettenteilungen.

Ausführungsbeispiele der Erfindung werden im folgenden beschrieben unter Bezugnahme auf die beiliegenden Zeichnungen.

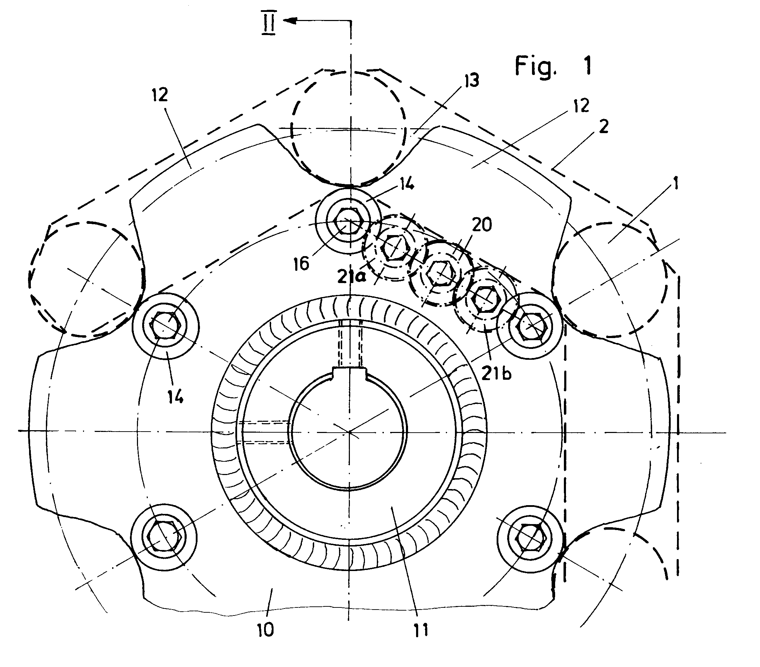

- Fig. 1: zeigt eine Teilansicht eines Kettenrades nach der Erfindung mit einer aufgenommenen Gelenkkette;

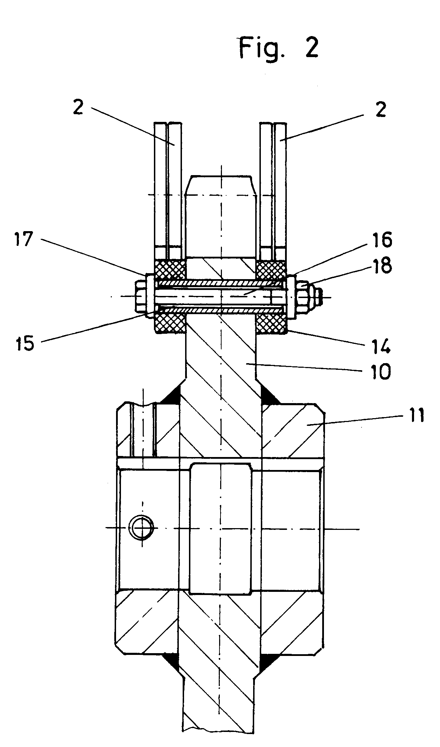

- Fig. 2: ist ein Schnitt nach II von Fig. 1.

An der Scheibe 10 des Kettenrades mit Nabe 11 sind beidseitig jeweils auf einem Teilkreis ringförmige Dämpfungselemente 14, aus einem verschleißfesten Kunststoff, beispielsweise einem solchen mit dem Handelsnamen Vulkollan paarweise angeordnet. Die Dämpfungselemente 14 liegen an der Scheibe an und werden von einem Kohlstift 15 (Spannstift) aufgenommen, der durch eine Bohrung in der Kettenradscheibe gesteckt ist. Die feste Verspannung der genannten Teile erfolgt durch eine Spannschraube 16, die durch den Hohlstift 15 hindurchgeht und die mittels Mutter 18 gespannt werden kann, wobei der Druck über Scheiben 17 auf die Dämpfungselemente 14 übertragen wird.

Jedes Paar Dämpfungselemente 14 ist derart einer Lücke 13 zwischen zwei Zähnen 12 des Kettenrades zugeordnet, daß die Laschen 2 einer Gelenkkette beim Umlauf derselben geräuschdämpfend abgestützt werden, wenn die Gelenkbüchsen 1 der Gelenkkette von den Lücken aufgenommen werden. Geräusche, wie sie durch die harte Anlage von Metall an Metall zwischen den Gelenkbüchsen und den Zähnen 12 des Kettenrades entstehen, werden gemildert durch die relativ weiche Anlage der Kettenlaschen 2 an den Dämpfungselementen.

Das gestrichelt gezeichnete Dämpfungselement 20 zeigt eine Anordnung alternativ zu den Dämpfungselementen 14 im Bereich der Lücken 13. Die Dämpfungselemente 20 sind dabei jeweils mittig im Bereich der Zähne 12 angeordnet. Eine weitere Alternative sind die Dämpfungselemente 21a und 21b über die Länge eines jeden Zahnes 12.

## Patentansprüche

1. Kettenrad für Gelenkketten, ausgerüstet mit Elementen zur Geräuschdämpfung, gekennzeichnet durch die nachfolgend genannten Merkmale:
- ringartige Dämpfungselemente (14) aus einem verschleißfesten Kunststoff sind jeweils paarweise beidseitig der Kettenradscheibe (10) anliegend befestigt in einer derartigen Anordnung, daß beim Umlaufen der Kette die beidseitigen Laschen derselben abgestützt sind;
- die ringartigen Dämpfungselemente (14) sind jeweils auf ein Ende eines von einer Bohrung in der Kettenradscheibe aufgenommenen Hohlstiftes (15) gesteckt, wobei die Spannkraft einer durch den Hohlstift hindurchgehenden Spannschraube (16) mittels Scheiben (17) auf die Dämpfungselemente übertragen wird.

2. Kettenrad für Gelenkketten nach Anspruch 1, dadurch gekennzeichnet, daß die Dämpfungselemente (14) im Bereich einer Lücke (13) zwischen zwei Zähnen (12) angeordnet sind.

3. Kettenrad nach Anspruch 1, dadurch gekennzeichnet, daß die Dämpfungselemente (20, 21a, 21b) im Bereich der Zähne (12) angeordnet sind.

## Claims

1. Sprocket for pintle chains equipped with elements for soundproofing, characterised by the following features:
- ring-shaped soundproofing elements (14) made of a wear-resistant plastic material are in each case fastened in pairs close to both sides of the sprocket disc (10) in such an arrangement that during the revolution of the chain the side bars of the latter provided on both sides are supported;
- the ring-shaped soundproofing elements are in each case slipped on the end of a hollow pin (15) accommodated in a bore provided in the sprocket disc, the tensional force of a tightening screw (16) passing through the hollow pin being transferred to the soundproofing elements by means of discs (17).

2. Sprocket for pintle chains as claimed in claim 1, characterised in that the soundproofing elements (14) are arranged in the region of a gap (13) between two teeth (12).

3. Sprocket as claimed in claim 1, characterised in that the soundproofing elements (20, 21a, 21b) are arranged in the region of the teeth (12).

## Revendications

1. Roue à chaîne pour chaîne à maillons articulés comprenant des éléments antibruits, caractérisée par les caractéristiques suivantes:
- des éléments antibruits (14) en forme d'anneau consistant en une matière plastique résistant à l'usure sont fixés chaque fois en paire tout près des deux côtés du disque (10) de la roue à chaîne en tel arrangement que les maillons des deux côtés de la chaîne sont étayés pendant la révolution de la chaîne;
- les éléments antibruits (14) sont attachés chaque fois sur un bout d'une cheville creuse (15) logée dans un alésage dans le disque de la roue à chaîne, la force de tension d'une vis de serrage (16) traversant la cheville creuse étant transferée aux éléments antibruits au moyen des disques (17).

2. Roue à chaîne pour chaîne à maillons articulés selon la revendication 1, caractérisée en ce que les éléments antibruits (14) sont arrangés dans la région d'un vide (13) entre deux dents (12).

3. Roue à chaîne selon la revendication 1, caractérisée en ce que les éléments antibruits (20, 21a, 21b) sont arrangés dans la région des dents (12).
